# EUROPÄISCHE PATENTSCHRIFT

(11) **EP 1 233 897 B1**
(45) Veröffentlichungstag und Bekanntmachung des Hinweises auf die Patenterteilung: **06.02.2008**
(21) Anmeldenummer: 01957757.6
(22) Anmeldetag: 04.08.2001
(51) Int. Cl.: B60T 17/02, B60K 25/04

(54) **VERFAHREN, COMPUTERPROGRAMM UND STEUERGERÄT ZUM BETREIBEN EINES IN EINER BRENNKRAFTMASCHINE VORGESEHENEN UNTERDRUCKSPEICHERS**
METHOD, COMPUTER PROGRAM AND CONTROL DEVICE FOR OPERATING A VACUUM RESERVOIR SITUATED INSIDE AN INTERNAL COMBUSTION ENGINE
PROCEDE, PROGRAMME INFORMATIQUE ET ORGANE DE COMMANDE DE FONCTIONNEMENT D'UN RESERVOIR A DEPRESSION INSTALLE DANS UN MOTEUR A COMBUSTION INTERNE

(30) Priorität: 10.08.2000 DE 10038989
(43) Veröffentlichungstag der Anmeldung: 28.08.2002
(73) Patentinhaber: ROBERT BOSCH GMBH, 70442 Stuttgart (DE)
(72) Erfinder: WILD, Ernst, 71739 Oberriexingen (DE); EBERLE, Kristina, 71706 Hardthof (DE); REUSCHENBACH, Lutz, 70469 Stuttgart (DE)
(86) Internationale Anmeldenummer: PCT/DE2001/002987
(87) Internationale Veröffentlichungsnummer: WO 2002/012041

(56) Entgegenhaltungen:
- DE-A- 4 444 013
- FR-A- 2 790 224

## Beschreibung

### Stand der Technik

Die Erfindung betrifft ein Verfahren zum Betreiben eines in einer Brennkraftmaschine insbesondere eines Kraftfahrzeugs vorgesehenen Unterdruckspeichers, der die für mindestens ein Servoaggregat benötigte Hilfsenergie in Form eines Unterdrucks bereitstellt und der mit einem in einem Saugrohr der Brennkraftmaschine und in einer insbesondere elektrischen Saugpumpe herrschenden Unterdruck beaufschlagt wird sowie eine entsprechende Vorrichtung.

Bei Kraftfahrzeugen ist bekannt (DE 31 25 923 C2, DE 44 44 013 A1), dass Servobrems- und Servolenksysteme meist ihre Hilfsenergie von einem Unterdruckspeicher beziehen, der an ein Saugrohr angeschlossen ist. Dieses Saugrohr dient zur Versorgung der Brennkraftmaschine mit der für die Verbrennung notwendigen Luft bzw. dem notwendigen Sauerstoff. Dabei wird der Saugrohrunterdruck in dem Unterdruckspeicher zwischengespeichert, wobei dieser über ein Rückschlagventil mit dem Saugrohr verbunden ist.

Für eine ausreichende Servounterstützung, beispielsweise Servobremzkraft, muss demnach genügend lange Unterdruck im Saugrohr vorhanden gewesen sein, um den entsprechenden Unterdruck in dem Unterdruckspeicher zu gewährleisten. Bei niedrigem Saugrohrdruck fließt Luft aus dem Speicher in das Saugrohr. Der auf diese Weise minimal in dem Unterdruckspeicher erzielbare Druck entspricht dem herrschenden Saugrohrdruck. Beim Betätigen der Bremse wird über ein Ventil der Unterdruckspeicher mit einer Stelleinrichtung verbunden, welche die Bremskraft verstärkt. Dabei fließt Luft in den Unterdruckspeicher und erhöht somit den Speicherdruck.

Bei Brennkraftmaschinen der vorgenannten Art ist in dem Saugrohr ferner eine Drosselklappe vorgesehen, mit der die dem Brennraum zugeführte Luft einstellbar ist. Bei herkömmlichen Brennkraftmaschinen, insbesondere beim OttoMotor, schließt die Drosselklappe auch in Fällen, bei denen der Fahrer beim Bremsen den Fuß vom Gaspedal nimmt, womit ein etwa vorliegender Speicherunterdruck erhalten bleibt. Daher ist bei diesen Brennkraftmaschinen gewährleistet, dass auch während eines Bremsvorgangs der Unterdruckspeicher den für die Servobremse erforderlichen Unterdruck auch während eines längeren Bremsvorgangs bereitzustellen vermag.

Bei neueren Brennkraftmaschinen mit Benzin-Direkteinspritzung (BDE) oder elektronisch gesteuerter Drosselklappe (E-Gas) ist dies allerdings nicht immer sichergestellt. Bspw. während eines Heizvorgangs eines vorhandenen Katalysators ist die Drosselklappe so weit geöffnet, dass nicht mehr genügend Unterdruck im Saugrohr vorliegt und demnach im Unterdruckspeicher der für das oder die Servosysteme erforderliche Unterdruck nicht mehr bereitgestellt werden kann.

Ferner wird bei Brennkraftmaschinen mit BDE oder E-Gas die Drosselklappe unabhängig von der Stellung des Pedalwertgebers angesteuert, wodurch Saugrohrunterdruck für Servofunktionen nur eingeschränkt zur Verfügung steht.

Beispiele hierfür sind Betriebszustände bei Saugrohreinspritzung mit spätem Zündwinkel zur Aufheizung des Katalysators im Warmlauf. Bei diesen Betriebszuständen muss nämlich eine gewünschte Wirkungsgradverschlechterung durch Öffnen der Drosselklappe kompensiert werden. Dies führt zur Erhöhung des Saugrohrdrucks. Der Schichtbetrieb bei Direkteinspritzung ist ein vergleichbarer Betriebszustand, bei dem die Drosselklappe auch bei niedriger Last voll geöffnet wird und damit kein Saugrohrunterdruck verfügbar ist.

Es kann dabei hinzu kommen, dass beim Betrieb der Fahrzeuge in Höhenlagen, bspw. während Bergfahrten, die Differenz zum Umgebungsdruck nicht mehr für die Servofunktionen ausreicht.

Besonders sicherheitskritisch.ist das Servobremssystem. Falls kein ausreichender Unterdruck verfügbar ist, steht keine Bremskraftunterstützung zur Verfügung, oder aber der gewünschte Betriebszustand kann aus Sicherheitsgründen nicht gefahren werden, was zu Verschlechterungen im Abgas oder Verbrauch führt.

Es ist deshalb bereits bekannt, dass Abhilfe dadurch geschaffen wird, dass die Drosselklappenöffnung so ausgelegt ist, dass immer genügend Unterdruck vorliegt. Dies hat z. B. während des Katalysatorheizens zur Folge, dass die Auslegung der Drosselklappenöffnung nicht abgasoptimal erfolgen kann. Bei BDE-betriebenen Fahrzeugen wird ferner ein Unterdruckschalter eingesetzt. Steigt der Druck im Bremskraftverstärker über einen Schwellwert, so wird von Schichtbetrieb auf Homogenbetrieb umgeschaltet.

Bei der hier zugrundegelegten Brennkraftmaschine ist eine Saugpumpe in das Fahrzeug eingebaut, die den fehlenden Differenzdruck ausgleicht, sobald der Druck im Ansaugrohr für das Evakuieren des Unterdruckspeichers nicht mehr ausreicht. Um die Kosten niedrig zu halten, sollte die Saugpumpe eine relativ einfache Komponente sein, die nur in den wirklich notwendigen Fällen in Betrieb genommen wird. Der Aufwand, der zu betreiben ist, um ein notwendiges Einschalten oder ein mögliches Ausschalten der Saugpumpe zu detektieren, sollte dabei aus Kostengründen ebenfalls möglichst gering sein.

Es ist somit die Aufgabe der vorliegenden Erfindung, ein Verfahren sowie eine entsprechende Vorrichtung anzugeben, mit denen ohne großen Aufwand und mit höchster Zuverlässigkeit die Funktionssicherheit beim Betrieb des Unterdruckspeichers erhöht und die maschinellen Aufwendungen und damit auch Kostenaufwendungen trotz des sicheren Betriebs des Unterdruckspeichers minimiert werden können.

Diese Aufgabe wird bei dem erfindungsgemäßen Verfahren dadurch gelöst, dass in einem Rechenmodell Mengenströme dem Unterdruckspeicher zugeführt werden, wenn wenigstens ein Servoaggregat betätigt wird; Mengenströme aus dem Unterdruckspeicher abgeführt werden, wenn der in dem Saugrohr herrschende Druck kleiner als der in dem Unterdruckspeicher herrschende Druck ist; Mengenströme aus dem Unterdruckspeicher abgeführt werden, wenn die elektrische Saugpumpe eingeschaltet ist; und der in dem Unterdruckspeicher herrschende Druck aus der Mengenbilanz der dem Unterdruckspeicher zugeführten und aus dem Unterdruckspeicher abgeführten Mengenströme ermittelt wird.

Der Erfindung liegt somit das Konzept zugrunde, den Druck im Unterdruckspeicher und damit auch den Unterdruck in einem Servosystem, bspw. dem Bremskraftverstärker, rechnerisch aus bekannten Signalen zu ermitteln. Dabei wird der Differenzdruck im Unterdruckspeicher bzw. dem Speicher des Servosystems durch ein Modell berechnet. Dieses Modell bestimmt aus der Mengenbilanz der Zuflüsse und Abflüsse von Luft in das Speichervolumen den jeweiligen Druck im Speicher.

Die Kompressibilität des Gases im Speicher kann durch die Zustandsgleichung für ideale Gase Berücksichtung finden. Der Mengenstrom in den Speicher kann bevorzugt aus der Differenz von Speicherdruck zu Saugrohrdruck bzw. Speicherdruck zu minimalem Saugpumpendruck unter Berücksichtung der Strömungswiderstände in den Leitungen zum Speicher berechnet werden. Aus dem Speicher abfließende Mengenströme können aus den Fahrzuständen, z. B: Kurvenfahrt mit einer entsprechenden Beaufschlagung des Servolenksystems oder einer Fahrzeugverzögerung mit einer entsprechenden Beaufschlagung des Servobremssystems bestimmt werden.

Bei bekannten Brennkraftmaschinen sind die bei dem erfindungsgemäßen Konzept zugrunde gelegten Ausgangsgrößen bereits aus einer entsprechenden Motorsteuerung, bspw. dem Motorsteuerungssystem "Motronic" der Anmelderin, bekannt. Bspw. bei Antiblockier-Bremssystemen (ABS) sind bereits Schnittstellen zur Motorsteuerung vorhanden, welche den Luftverbrauch in der Servobremse an die Motorsteuerung übertragen. Auch die Informationen über Saugrohrdruck, Umgebungsdruck, Änderung der Fahrzeuggeschwindigkeit und Betriebszustand der Saugpumpe sind bei bekannten Motorsteuerungen üblicherweise vorhanden. Die zusätzlich erforderlichen Sensoren, wie Druckschalter oder Drucksensoren im Druckspeicher, sind ebenfalls bei bestehenden Systemen vorhanden. Somit sind bei einer Realisierung des erfindungsgemäßen Verfahrens vorteilhafterweise keine zusätzlichen bautechnischen Maßnahme an bestehenden Brennkraftmaschinen erforderlich.

Gemäß einer bevorzugten Vorgehensweise wird der erforderliche Differenzdruck mit dem verfügbaren Differenzdruck verglichen. Falls kein ausreichender Differenzdruck verfügbar ist, wird entweder die Saugpumpe eingeschaltet oder der Motorbetriebszustand geändert. Bei einer Änderung des Betriebszustands wird ein solcher mit erhöhtem Saugrohrunterdruck durch verringerte Drosselklappenöffnung von der Motorsteuerung eingestellt.

In Weiterbildung des Erfindungsgedankens erfolgt im Schichtbetrieb eine zusätzliche Androsselung. Beim Katalysatorheizen mittels spätem Zündwinkel erhält ein für den Wirkungsgrad optimaler Zündwinkel Priorität vor dem Katalysatorheizen. Dadurch benötigt der Motor weniger Luftmassenstrom, die Drosselklappe kann geschlossen werden und der Saugrohrdruck nimmt ab.

Die Änderungen des Betriebszustandes mit erhöhtem Saugrohrunterdruck können ferner durch Eingriffe in die Wirkungsgradvorgabe oder die Betriebszustandsvorgabe der Motorsteuerung vorgenommen werden. Auch direkte Eingriffe auf die Zündwinkel bei Motorsteuerungen ohne Modellierung von Wirkungsgrad oder Betriebszustand sind denkbar.

Bei Motorsteuerungskonzepten zur Optimierung von Verbrauch und Abgasverhalten treten Betriebszuständen mit hohem Saugrohrdruck auf. Entsprechend dem vorgeschlagenen Verfahren wird bei nicht ausreichendem Unterdruck im Servosystem entweder durch Einschalten der Saugpumpe und/oder durch Änderung des Betriebszustandes ausreichend Unterdruck des Servosystems sichergestellt. Das vorgeschlagene Verfahren ermöglicht dabei insbesondere den Verzicht auf ein am Unterdruckspeicher vorgesehenen Drucksensor oder bei etwa vorhandenem Drucksensor eine entsprechende Funktionsüberwachung dieses Sensors.

Gemäß einer weiteren bevorzugten Vorgehensweise des erfindungsgemäßen Verfahrens kann vorgesehen sein, dass die dem Unterdruckspeicher zugeführten Mengenströme und/oder die aus dem Unterdruckspeicher abgeführten Mengenströme fortlaufend mit jeweils entsprechendem Vorzeichen aufsummiert oder aufintegriert werden. Der Inhalt des Unterdruckspeichers lässt sich somit kontinuierlich und dynamisch an die jeweils vorliegenden Mengenströme anpassen und erlaubt eine Vorhersage des in diesem herrschenden Drucks zu jedem Zeitpunkt. Die jeweiligen Mengenströme können hierbei entweder als diskrete Luftvolumina aufsummiert oder als infinitesimale Luftvolumenänderungen aufintegriert werden.

Bei dem erfindungsgemäßen Verfahren kann ferner vorgesehen sein, dass Mengenströme aus dem Unterdruckspeicher nur dann abgeführt werden, wenn die Differenz zwischen dem in dem Saugrohr oder der Saugpumpe herrschenden Druck und dem in dem Unterdruckspeicher herrschenden Druck einen vorgegebenen Schwellenwert überschreitet. In der technischen Realität ist zumindest zwischen dem Unterdruckspeicher und dem Saugrohr ein Rückschlagventil angeordnet, das somit anhand des vorgeschlagenen Schwellenwertes bei der erfindungsgemäßen Modellrechnung ebenfalls Berücksichtigung findet. Der Schwellenwert kann dabei in vorteilhafter Weise an die jeweiligen physikalischen Gegebenheiten angepasst werden und somit als zusätzlicher Parameter zur Optimierung des vorgeschlagenen Modells dienen. Darüber hinaus können anhand des Parameters etwa auftretende Druckverluste aufgrund von Strömungswiderständen in den Leitungen berücksichtigt werden.

Bei der der Erfindung zugrunde liegenden Modellrechnung kann ferner vorgesehen sein, dass die dem Unterdruckspeicher zugeführten und/oder die aus dem Unterdruckspeicher abgeführten Mengenströme aus Betriebszuständen der Brennkraftmaschine, insbesondere aus Fahrzuständen des Kraftfahrzeugs, berechnet werden. Zum einen ist der im Saugrohr herrschende Druck von den Betriebszuständen der Brennkraftmaschine insofern abhängig, als die vom Saugrohr in den Brennraum zugeführte Luft von dem jeweiligen Zustand der Verbrennung abhängt und zum anderen die dem Saugrohr zugeführte Luft bspw. über die Drosselklappe steuerbar ist. Bei einem Kraftfahrzeug können Parameter wie die Fahrzeuggeschwindigkeit oder die Bremsverzögerung zu Rate gezogen werden, denn aus diesen kann insbesondere rückgeschlossen werden auf die über einen Bremskraftverstärker dem Unterdruckspeicher zugeführten Luftmassen.

Gemäß einer weiteren vorteilhaften Ausgestaltung des erfindungsgemäßen Verfahrens kann vorgesehen sein, dass die dem Unterdruckspeicher zugeführten Mengenstöme mittels einer Stufenfunktion, welche durch eine das Ansprechen einer Servofunktion repräsentierende Signalflanke getriggert wird, berechnet werden. Durch diese vorgeschlagene Maßnahme wird der technischen Realität insofern entsprochen als bspw. im Falle eines Bremskraftverstärkers bei der bei einem Bremsmanöver vorliegenden Beaufschlagung des Bremskraftverstärkers mit einer entsprechenden Bremskraft die dem Unterdruckspeicher zugeführten Volumenströme in etwa einer Stufenfunktion entsprechen mit einer in etwa konstanten zeitlichen Länge pro Bremseingriff. Die vorgeschlagene Stufenfunktion kann dabei insbesondere in Form eines Monoflops modelliert werden.

Basierend auf der erfindungsgemäß vorgeschlagenen Modellierung des Drucks in dem Unterdruckspeicher kann ferner vorgesehen sein, dass in Abhängigkeit von dem aus der Mengenbilanz berechneten in dem Unterdruckspeicher herrschenden Druck ein den Druck in dem Unterdruckspeicher erniedrigender Eingriff an der Brennkraftmaschine, insbesondere ein Verstellen einer in dem Saugrohr etwa vorgesehenen Drosselklappe, vorgenommen und/oder die Saugpumpe eingeschaltet wird. Durch diesen Eingriff wird also der für das Servosystem erforderliche Unterdruck beim Überschreiten einer Druckschwelle automatisch wieder bereitgestellt, ohne dass irgendein Eingriff oder eine Interaktion seitens des Fahrers erforderlich wäre. Es wird also gemäß dieser Ausgestaltung sichergestellt, dass ein entsprechender Unterdruck jederzeit gegeben ist.

Alternativ oder zusätzlich dazu kann vorgesehen sein, dass in Abhängigkeit von dem aus der Mengenbilanz berechneten in dem Unterdruckspeicher herrschenden Druck eine entsprechende Flagge gesetzt wird und insbesondere ein Kontroll- oder Warnsignal herausgegeben wird. Bei diesem Ausführungsbeispiel wird somit nicht unbedingt automatisch ein den Druck in dem Unterdruckspeicher erniedrigender Eingriff an der Brennkraftmaschine vorgenommen, sondern zunächst ein entsprechendes Bit gesetzt, das im Weiteren insbesondere ein entsprechendes Kontroll- oder Warnsignal auslösen kann. Hierdurch ist es dem Fahrer möglich, die erforderlichen Gegenmaßnahmen von sich aus einzuleiten oder er ist zumindest über die eingeleiteten Maßnahmen informiert.

Gemäß einem weiteren bevorzugten Ausführungsbeispiel des erfindungsgemäßen Verfahrens kann vorgesehen sein, dass der berechnete, in dem Unterdruckspeicher herrschende Druck für eine Funktionsüberwachung eines etwa vorgesehenen Drucksensors verwendet wird. Die modellbasierte rechnerische Ermittlung des in dem Unterdruckspeicher herrschenden Drucks wird hierbei als weitere Sicherheitseinrichtung einer gattungsgemäßen Brennkraftmaschine eingesetzt und ermöglich somit das Aufspüren eines Funktionsausfalls eines bereits vorhandenen Drucksensors.

Es wird hervorgehoben, dass von den verschiedenen in einem Kraftfahrzeug vorgesehenen Servofunktionen - im Hinblick auf maximale Fahrsicherheit - der Bremsservofunktion gegenüber den anderen Servofunktionen Vorrang einzuräumen ist. Somit kann gemäß einer vorteilhaften Weiterbildung des Erfindungsgedankens vorgesehen sein, dass im Falle eines ungenügenden Unterdrucks in dem Unterdruckspeicher Funktionen wie Lenkservo oder Resonanzklappensteuerung vorübergehend deaktiviert werden, um zumindest eine ausreichende Bremsservofunktion zu gewährleisten. Dies ist vor allem dann wichtig, wenn der Benutzer in einem solchen Maße (z.B. durch Pumpen mit dem Bremspedal) Bremskraft abfordert, dass die hierfür benötigte Luftmenge auch von der elektrischen Saugpumpe nicht schnell genug aus dem Unterdruckspeicher evakuiert werden kann.

Bei der Modellierung des in den und aus dem Unterdruckspeicher hinein-/herausfließenden Massenströmen kann zudem in erster vorteilhafter Näherung angenommen werden, dass die Summe der zu- und abfließenden Luftströme konstant ist. Bei der Dimensionierung des Integrators/Summators der zu- und abfließenden Massenströme kann ferner als untere Grenze der in dem Saugrohr oder der Saugpumpe herrschende Druck angenommen werden und als obere Grenze der Umgebungsdruck.

Die Erfindung betrifft auch ein Computerprogramm, welches zur Durchführung des oben beschriebenen Verfahrens geeignet ist, wenn es auf einem Computer ausgeführt wird. Besonders bevorzugt ist dabei ein Computerprogramm, welches auf einem Speicher abgespeichert ist, insbesondere auf einem Flash-Memory.

Bei dem erfindungsgemäß ebenfalls vorgeschlagenen Steuergerät für eine gattungsgemäße Brennkraftmaschine sind Mittel zum Erfassen der Betätigung mindestens einer Servofunktion, Mittel zum Sensieren des in dem Saugrohr herrschenden Drucks, Mittel zum Sensieren des Betriebszustands der Saugpumpe und Mittel zum Berechnen des in dem Unterdruckspeicher herrschenden Drucks vorgesehen, die vorsehen, dass Mengenströme dem Unterdruckspeicher zugeführt werden, wenn wenigstens eine Servofunktion anspricht, und Mengenströme aus dem Unterdruckspeicher abgeführt werden, wenn der in dem Saugrohr herrschende Druck kleiner als der in dem Unterdruckspeicher herrschende Druck ist, und die vorsehen, dass der in dem Unterdruckspeicher herrschende Druck aus der Mengenbilanz der dem Unterdruckspeicher zugeführten und aus dem Unterdruckspeicher abgeführten Mengenströme berechnet wird. Es sind also zunächst Datenerfassungsmittel vorgesehen, bspw. ein Schalter oder ein Sensor zum Erfassen der Betätigung mindestens einer Servofunktion, bspw. ein Bremsschalter oder Bremslichtschalter zum Erfassen einer Bremstätigkeit, sowie Mittel zum Erfassen des für die Modellrechnung erforderlichen Saugrohrdrucks und des Betriebszustands der Saugpumpe. Darüber hinaus sind Mittel zur Verarbeitung dieser gewonnenen Informationen anhand des vorgeschlagenen Modells vorgesehen.

Weitere Merkmale und Vorteile des erfindungsgemäßen Verfahrens sowie der Steuereinheit ergeben sich aus dem nachfolgend anhand von Zeichnungen beschriebenen Ausführungsbeispiel der Erfindung.

Im Einzelnen zeigen:
- Fig. 1: ein Blockschaltbild einer erfindungsgemäßen Brennkraftmaschine eines Kraftfahrzeugs;
- Fig. 2: ein Flussdiagramm eines ersten Abschnitts eines Ausführungsbeispiels eines erfindungsgemäßen Verfahrens;
- Fig. 3: ein Flussdiagramm eines zweiten Abschnitts des Verfahrens; und
- Fig. 4: ein Flussdiagramm eines dritten Abschnitts des Verfahrens.

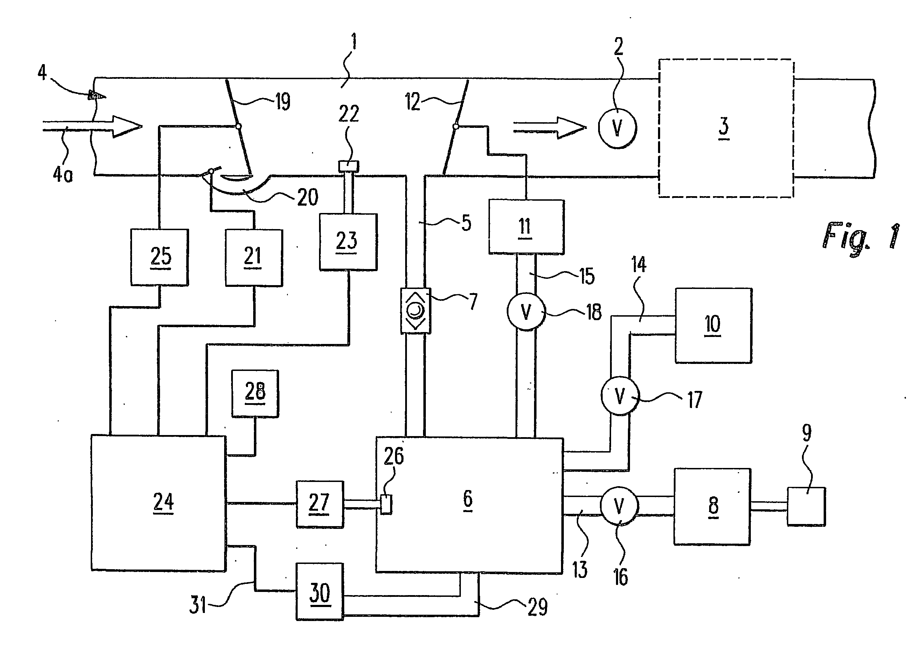

Die in Fig. 1 dargestellte Brennkraftmaschine weist ein Saugrohr 1 auf, das über hier nicht näher dargestellte Ventile 2 mit einem Brennraum 3 der Brennkraftmaschine verbunden ist. Die Zufuhr von Luft in das Saugrohr erfolgt über eine Öffnung 4. Über eine Leitung 5 steht das Saugrohr 1 in druckleitender Verbindung mit einem Unterdruckspeicher 6. Innerhalb dieses Leitungsweges ist ein Rückschlagventil 7 angeordnet. Mit dem Unterdruckspeicher 6 in druckleitender Verbindung stehen insbesondere Servoeinrichtungen des Kraftfahrzeugs, die in der vorliegenden Brennkraftmaschine eingebaut sind. Als Servosysteme sind in dem vorliegenden Ausführungsbeispiel ein Bremskraftverstärker 8, der über einen hier nicht gezeigten Hauptbremszylinder mit einem Bremspedal 9 in druckleitender Verbindung steht, sowie ein Lenkservosystem 10 und eine Resonanzklappensteuerung 11 vorgesehen. Letztere liefert die für den Betrieb einer Resonanzklappe 12 erforderliche Hilfsenergie. Diese Servosysteme sind über Leitungen 13, 14, 15 mit dem Unterdruckspeicher 6 druckleitend verbunden.

Bei den Druckleitungen 13, 14, 15 sind ferner Ventile 16, 17, 18 vorgesehen, mittels derer die einzelnen Servosysteme nur bei Bedarf mit dem Unterdruckspeicher in druckleitende Verbindung gebracht werden können. In der Leitung 5 zwischen dem Saugrohr 1 und dem Unterdruckspeicher 6 fließt Luft in eine der beiden Richtungen, je nachdem, ob der Druck in dem Saugrohr geringer oder höher ist als in dem Unterdruckspeicher 6. Das bereits erwähnte Rückschlagventil 7 sorgt nun insbesondere dafür, dass der Luftstrom in Richtung Unterdruckspeicher vermieden wird und somit der Unterdruckspeicher 6 nicht mit Luft vollläuft, sobald im Saugrohr 1 ein höherer Druck als im Unterdruckspeicher 6 herrscht.

In dem Saugrohr 1, in der Nähe der Öffnung 4, ist ferner eine Drosselklappe 19 vorgesehen, mittels der der in das Saugrohr einfließende Luftstrom 4a steuer- und/oder regelbar ist. Über eine zusätzliche Bypassleitung 20 kann sichergestellt werden, dass im Leerlaufbetrieb der Brennkraftmaschine genügend Luft dem Saugrohr zugeführt wird. Die Steuerung und/oder Regelung der Bypassleitung 20 erfolgt dabei über einen Leerlaufsteller 21.

Ferner ist an dem Saugrohr ein Drucksensor 22 vorgesehen, der die Messung des in dem Saugrohr herrschenden Drucks gestattet. Das von dem Drucksensor 22 gelieferte Signal kann zunächst einer Saugrohrdrucksensorelektronik 23 zugeführt werden oder aber direkt an ein elektronisches Steuergerät 24 weitergegeben werden.

Entsprechend wird das Ausgangssignal des Leerlaufstellers 21 dem elektronischen Steuergerät 24 zugeführt. Ferner wird die Stellung der Drosselklappe 19 über ein Drosselklappenpotentiometer 25 ermittelt und das entsprechende Messsignal dem elektronischen Steuergerät 24 ebenfalls zugeführt.

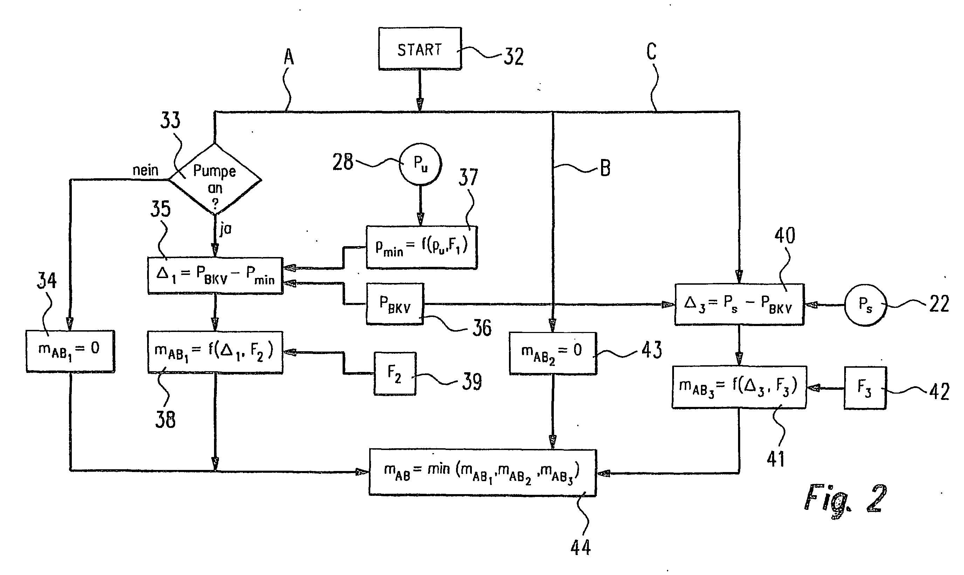

Als weitere Druckinformationen wird zum einen der in dem Unterdruckspeicher 6 herrschende Druck mittels eines Drucksensors 26 über eine ggf. vorliegende Drucksensorelektronik 27 dem Steuergerät 24 zugeführt. Der für das erfindungsgemäße Rechenmodell (siehe Figuren 2 bis 4) erforderliche Umgebungsdruck wird schließlich mittels eines Umgebungsdrucksensors 28 dem Steuergerät 24 übermittelt.

Der Unterdruckspeicher 6 ist ferner über eine Leitung 29 fluidisch mit einer Saugpumpe 30 verbunden, die wiederum über eine Leitung 31 von dem Steuergerät 24 angesteuert wird und an dieses Signale bzgl. ihres Betriebszustands überträgt.

In den Figuren 2 bis 4 ist ein Verfahrensablauf dargestellt, nach dem der im Unterdruckspeicher 6 herrschende Unterdruck durch ein entsprechendes Modell ermittelt wird. Das in Fig. 2 dargestellte Flussdiagramm betrifft die Ermittlung der aus dem Unterdruckspeicher 6 abgeführten Mengenströme und beginnt mit einem Startblock 32. Danach verteilt sich der in Fig. 2 dargestellte Abschnitt des Verfahrens in drei Zweige A, B und C.

In dem in Fig. 2 linken Zweig A wird zunächst im Block 33 abgefragt, ob die elektrische Saugpumpe 30 eingeschaltet ist. Wenn die Pumpe ausgeschaltet ist, wird im Block 34 ein Wert m_{ab1} für die von der elektrischen Saugpumpe 30 aus dem Unterdruckspeicher 6 evakuierte Luft gleich Null gesetzt.

Ist die Pumpe eingeschaltet, wird im Block 35 die Differenz Δ₁ zwischen dem im Unterdruckspeicher 6 herrschenden Druck p_{BKV} und dem von der elektrischen Saugpumpe 30 minimal erzielbaren Druck pₘᵢₙ berechnet. Der im Unterdruckspeicher 6 herrschende Druck p_{BKV} wird aus einem Speicher 36 entnommen, in dem der bei einer vorhergehenden Schleife berechnete und im Unterdruckspeicher 6 herrschende Druck abgelegt ist. Der von der elektrischen Saugpumpe 30 minimal erzielbare Druck pₘᵢₙ wird im Block 37 berechnet. Dort.wird der Umgebungsdruck p_{U}, welcher vom Umgebungsdrucksensor 28 bereitgestellt wird, mit einem Faktor F₁ beaufschlagt. Hierdurch wird berücksichtigt, dass die elektrische Saugpumpe 30 nur eine bestimmte Druckdifferenz gegenüber dem Umgebungsdruck p_{U} bereitstellen kann.

Ein Wert m_{ab1} für die von der elektrischen Saugpumpe 30 aus dem Unterdruckspeicher 6 evakuierbare Luftmenge wird im Block 38 durch die Beaufschlagung der Differenz Δ₁ mit einem Faktor F₂ berechnet. Der Faktor F₂ ist in einem Speicher 39 abgelegt und stellt einen Gewichtungsfaktor dar, durch den der Einfluß der elektrischen Saugpumpe 30 auf das Gesamtsystem berücksichtigt werden kann.

In dem in Fig. 2 rechten Zweig C des Flussdiagramms wird die gegebenenfalls in das Saugrohr 1 der Brennkraftmaschine evakuierte Luftmenge berechnet. Hierzu wird zunächst im Block 40 die Differenz Δ₃ zwischen dem im Saugrohr 1 herrschenden Druck p_{S} und dem im Unterdruckspeicher 6 herrschenden Druck p_{BKV} berechnet. Der Druck im Saugrohr 1 wird von dem Drucksensor 22 bereitgestellt, der Druck p_{BKV} im Unterdruckspeicher 6 wie schon beim oben beschriebenen linken Zweig A aus dem Speicher 36 abgerufen. Im Block 41 wird die Differenz Δ₃ mit einem Gewichtungsfaktor F₃ beaufschlagt, der in einem Speicher 42 abgelegt ist und durch den der Einfluß des Saugrohrs 1 auf das Gesamtsystem berücksichtigt werden kann. Das Ergebnis der im Block 41 durchgeführten Operation ist ein Wert m_{ab3} für die vom Unterdruckspeicher 6 in das Saugrohr 1 evakuierte Luftmenge.

In dem mittleren Zweig B wird ein Wert m_{ab2} gleich Null gesetzt (Block 43). Der Sinn dieser Maßnahme ist weiter unten erläutert.

Im Block 44 wird aus den drei Werten m_{ab1}, m_{ab2} und m_{ab3} der Minimalwert gebildet. Unter normalen Umständen, d.h. dann, wenn der minimal von der elektrischen Saugpumpe 30 erzielbare Druck pₘᵢₙ und/oder der Druck p_{S} im Saugrohr 1 niedriger sind als der Druck p_{BKV} im Unterdruckspeicher 6, handelt es sich bei den Werten m_{ab1} bzw. m_{ab3} um negative Werte. In seltenen Fällen kann es jedoch vorkommen, dass der Druck p_{BKV} kleiner ist als der im Saugrohr 1 herrschende Druck pₛ oder als der von der elektrischen Saugpumpe 30 erzielbare Druck pₘᵢₙ. Dies kann z.B. bei einer Bergfahrt eines Kraftfahrzeugs der Fall sein, bei der das Fahrzeug eine große Höhendifferenz bewältigt. In diesem.Fall würde Luft in den Unterdruckspeicher 6 strömen und diesen wieder "auffüllen", was natürlich unerwünscht ist und durch das Rückschlagventil 7 verhindert wird. Der Einfluß des Rückschlagventils in einem solchen Fall wird dadurch berücksichtigt, dass im Block 43 ein Wert m_{ab2} gleich Null gesetzt wird, welcher im Block 44 in diesem seltenen Fall als Minimalwert verwendet wird.

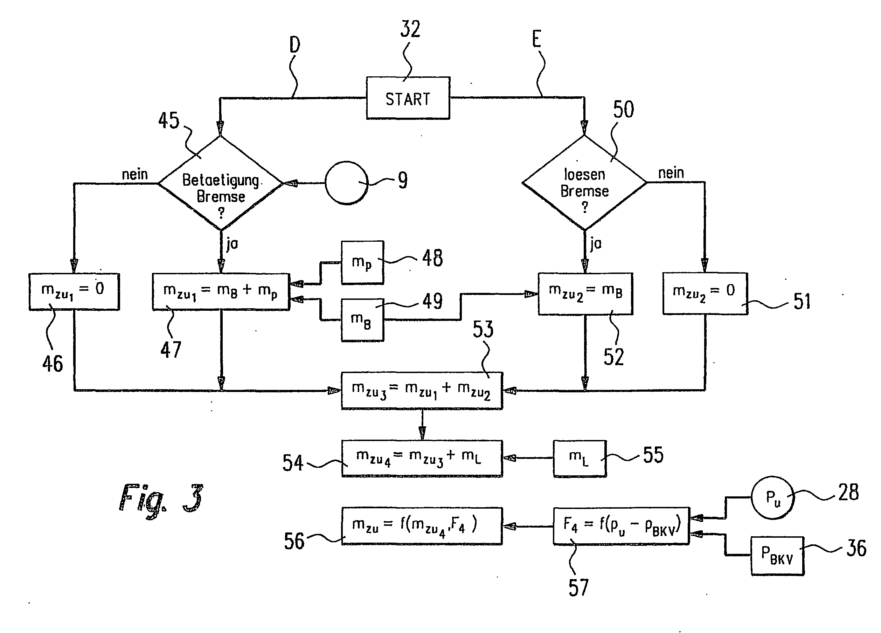

In Fig. 3 ist ein zweiter Abschnitt des Verfahrens zum Betreiben des Unterdruckspeichers 6 dargestellt, in dem die zugeführten Mengenströme des Modells ermittelt werden und welcher ebenfalls mit dem Startblock 32 beginnt und sich in zwei Zweige D und E aufteilt. In dem in Fig. 3 linken Zweig D wird im Block 45 abgefragt, ob über das Bremspedal 9 der Bremskraftverstärker 8 betätigt wurde. Unter einer Betätigung wird dabei ein dynamischer Vorgang verstanden, bei dem die Bremse aus einem gelösten Zustand in einen betätigten Zustand gebracht wird. Ein Verbleiben im betätigten stationären Zustand würde im Entscheidungsblock 45 das Abfrageergebnis "nein" bedeuten. In diesem Fall oder dann, wenn die Bremse in einem stationären gelösten Zustand verbleibt, wird im Block 46 ein Wert für die dem Unterdruckspeicher 6 aus dem Bremskraftverstärker 8 zufließende Luftmenge m_{zu1} gleich Null gesetzt. Andernfalls wird im Block 47 die Luftmenge m_{zu1} aus der Summe zweier Werte m_{B} und m_{P} berechnet, die in Speichern 48 und 49 abgelegt sind. Der Wert m_{B} steht dabei für jene Luftmenge, welche bei einer dynamischen Betätigung der Bremse vom Bremskraftverstärker 8 in den Unterdruckspeicher 6 strömt. Durch den Wert m_{P} wird berücksichtigt, dass es während eines Bremsvorganges oft zu einer Veränderung der Bremskraft und somit zu einem zusätzlichen Strömen von Luft aus dem Bremskraftverstärker 8 in den Unterdruckspeicher 6 hinein kommen kann. Ein solcher Vorgang wird auch als "Pumpen" bezeichnet.

In dem in Fig. 3 rechten Zweig E des Ablaufdiagramms wird in Block 50 abgefragt, ob ein Lösen der Bremse erfolgt. Analog zu den Ausführungen im Hinblick auf Block 45 bedeutet ein Lösen der Bremse hier, dass die Bremse dynamisch von einem betätigten in einen gelösten Zustand übergeht.

Verbleibt die Bremse bzw. das Bremspedal 9 und der Bremskraftverstärker 8 in einem stationären gelösten Zustand, lautet die Antwort im Entscheidungsblock 50 "nein". In diesem Fall strömt keine Luft vom Bremskraftverstärker 8 in den Unterdruckspeicher 6, was im Block 51 dadurch berücksichtigt ist, dass eine Luftmenge m_{zu2} gleich Null gesetzt wird.

Lautet die Anwort im Entscheidungsblock 50 "ja", wird im Block 52 die dem Unterdruckspeicher 6 zufließende Luftmenge m_{zu2} gleich dem im Speicher 49 abgelegten Wert m_{B} gesetzt.

Aus den Werten m_{zu1} und m_{zu2} wird im Block 53 die Summe m_{zu3} gebildet. Im Block 54 wird zu dieser ein Wert m_{L} hinzuaddiert, der in einem Speicher 55 abgelegt ist. Bei dem auf diese Weise berechneten Wert m_{zu4} ist eine dem Wert m_{L} entsprechende, für das System angenommene Grundleckage berücksichtigt.

Die letztendlich dem Unterdruckspeicher 6 zufließende Luftmenge m_{zu} wird im Block 56 berechnet, indem der Wert m_{zu4} mit einem Faktor F₄ beaufschlagt wird. Durch diesen Faktor F₄ wird berücksichtigt, dass die bei einer Bremsbetätigung vom Bremskraftverstärker 8 in den Unterdruckspeicher 6 strömende Luftmenge m_{zu} und auch die Grundleckage m_{L} von der Druckdifferenz zwischen dem Umgebungsdruck p_{U} und dem im Unterdruckspeicher 6 herrschenden Druck p_{BKV} abhängig sind. Der Faktor F₄ wird auf der Basis dieser Druckdifferenz im Block 57 berechnet.

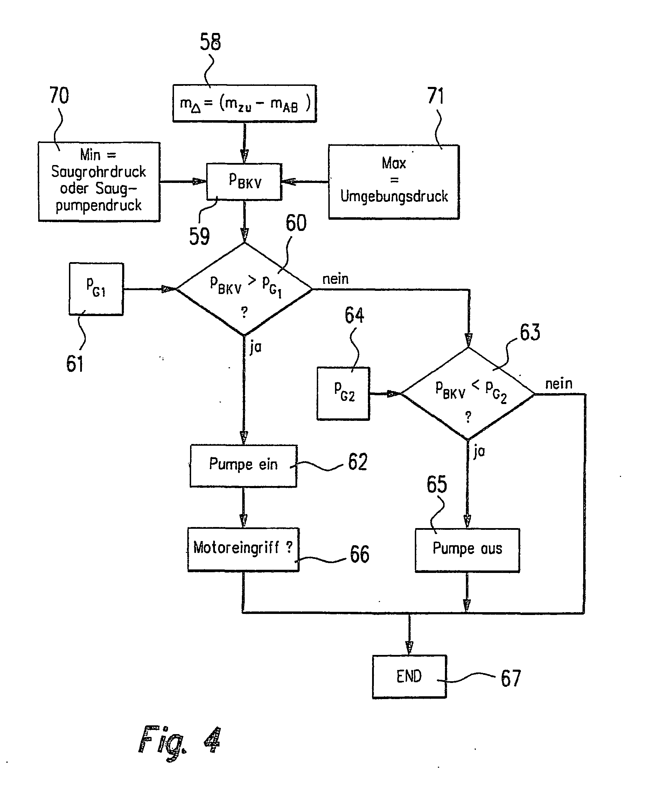

Nun wird auf den in Fig. 4 dargestellten Verfahrenabschnitt Bezug genommen, in dem für das Modell eine Mengenbilanz durchgeführt wird:

Im Block 58 wird die Differenz zwischen dem in Fig. 3 bestimmten Wert m_{zu} und dem in Fig. 2 bestimmten Wert m_{ab} berechnet, also eine Mengenbilanz mit entsprechendem Vorzeichen durchgeführt. Aus dieser wird im nachfolgenden Block 59 unter Berücksichtigung der idealen Gasgleichung und des Volumens des Unterdruckspeichers 6 der im Unterdruckspeicher 6 herrschende Druck p_{BKV} durch fortlaufende Integration berechnet. Dieser wird im Block 70 mit einem Minimalwert, nämlich dem Saugrohrdruck im Leerlauf der Brennkraftmaschine oder dem minimalen Druck der elektrischen Saugpumpe verglichen und gleich diesem Wert gesetzt, sofern dieser Minimalwert aufgrund der Aufintegration unterschritten wird. Analog hierzu findet im Block 71 ein Vergleich mit einem Maximalwert, nämlich dem Umgebungsdruck, statt, und der Druck im Unterdruckspeicher wird gleich diesem Maximalwert gesetzt, wenn dieser von dem berechneten Wert überschritten wird.

Ausgehend von diesem berechneten und im Unterdruckspeicher 6 herrschenden Druck p_{BKV} wird nun bestimmt, ob Maßnahmen zur Absenkung des Drucks p_{S} im Ansaugrohr 1 eingeleitet werden müssen oder die elektrische Saugpumpe 30 eingeschaltet werden muss. Hierzu wird der Wert p_{BKV} im Block 60 mit einem Grenzwert p_{G1} verglichen, der in einem Grenzwertspeicher 61 abgelegt ist. Lautet die Antwort im Block 60 "ja" (liegt also ein zu geringer Unterdruck im Unterdruckspeicher 6 vor), wird vom Steuergerät 24 im Block 62 veranlasst, dass die elektrische Saugpumpe 30 eingeschaltet wird. Ggf. kann zusätzlich die Ausgabe eines Alarmsignals, z.B. das Aufleuchten einer Warnleuchte im Armaturenbrett des Kraftfahrzeugs, veranlaßt werden.

Lautet die Antwort im Block 60 "nein", was gleich bedeutend ist mit einem mindestens dem gewünschten Sollwert p_{G1} entsprechenden Druck im Unterdruckspeicher 6, wird im Block 63 geprüft, ob der im Unterdruckspeicher 6 herrschende Druck p_{BKV} kleiner ist als ein Grenzwert p_{G2}, der in einem Grenzwertspeicher 64 abgelegt ist. Lautet die Antwort im Block 63 "ja", wird vom Steuergerät 24 im Block 65 ein Ausschalten der elektrischen Saugpumpe 30 veranlasst. Der Grenzwert p_{G2} ist dabei kleiner als der Wert p₁, um eine Hysterese zwischen Bedingungen zu erhalten, welche ein Ein- bzw. Ausschalten der elektrischen Saugpumpe 30 rechtfertigen. Durch die Hystere wird ein "Flattern" der elektrischen Saugpumpe 30 verhindert, bei dem in schneller Aufeinanderfolge Ein- und Ausschaltbefehle an die elektrische Saugpumpe 30 abgegeben werden.

Reicht die Saugleistung der elektrischen Saugpumpe 30 nicht aus, um den geforderten Druck p_{G1} im Unterdruckspeicher 6 innerhalb eines bestimmten Zeitraums herzustellen, wird dies im Block 66 erfasst und gegebenenfalls eine den Druck im Saugrohr 1 erniedrigende Maßnahme eingeleitet. Hierzu gehört z.B. das Verstellen der Drosselklappe 19. Ggf. kann ferner die Ausgabe eines Alarms veranlaßt werden. Durch die Anordnung des Blocks 66 hinter dem Block 62 wird dem Einschalten der elektrischen Saugpumpe 30 eine Priorität gegenüber einem Motoreingriff eingeräumt. Dies hat insbesondere bei BDE-Motoren und E-Gas-Systemen den Vorteil, dass der Motor möglichst oft in dem für den geringsten Brennstoffverbrauch und geringste Abgasemissionen optimalen Arbeitsbereich betrieben werden kann.

Der Durchlauf endet im Block 67. Von dort kann ggf. ein Rücksprung zum Startblock 32 erfolgen. Der Rücksprung kann dabei z.B. zyklisch mit einer bestimmten Taktrate oder ereignisgesteuert erfolgen.

## Patentansprüche

1. Verfahren zum Betreiben eines in einer Brennkraftmaschine insbesondere eines Kraftfahrzeugs vorgesehenen Unterdruckspeichers (6), der die für mindestens ein Servoaggregat (8, 10, 11) benötigte Hilfsenergie in Form eines Unterdrucks bereitstellt und der mit einem in einem Saugrohr (1) der Brennkraftmaschine und in einer insbesondere elektrischen Saugpumpe (30) herrschenden Unterdruck beaufschlagt wird, **dadurch gekennzeichnet, dass** in einem Modell Mengenströme dem Unterdruckspeicher (6) zugeführt werden, wenn wenigstens ein Servoaggregat (8, 10, 11) betätigt wird; Mengenströme aus dem Unterdruckspeicher (6) abgeführt werden, wenn der in dem Saugrohr (1) herrschende Druck kleiner als der in dem Unterdruckspeicher (6) herrschende Druck ist; Mengenströme aus dem Unterdruckspeicher (6) abgeführt werden, wenn die elektrische Saugpumpe (30) eingeschaltet ist; und der in dem Unterdruckspeicher (6) herrschende Druck aus der Mengenbilanz der dem Unterdruckspeicher (6) zugeführten und aus dem Unterdruckspeicher (6) abgeführten Mengenströme ermittelt wird.

2. Verfahren nach Anspruch 1, **dadurch gekennzeichnet, dass** die dem Unterdruckspeicher (6) zugeführten Mengenströme (56) und/oder die aus dem Unterdruckspeicher (6) abgeführten Mengenströme (44) fortlaufend mit jeweils entsprechendem Vorzeichen aufsummiert oder aufintegriert werden (58).

3. Verfahren nach Anspruch 1 oder 2, **dadurch gekennzeichnet, dass** die Mengenströme aus dem Unterdruckspeicher (6) nur dann abgeführt werden (45), wenn die Differenz zwischen dem in dem Saugrohr herrschenden Druck und dem in dem Unterdruckspeicher (6) herrschenden Druck einen vorgegebenen Schwellenwert überschreitet.

4. Verfahren nach einem oder mehreren der Ansprüche 1 bis 3, **dadurch gekennzeichnet, dass** die dem Unterdruckspeicher (6) zugeführten (56) und/oder die aus dem Unterdruckspeicher (6) abgeführten Mengenströme (44) aus Betriebszuständen der Brennkraftmaschine, insbesondere aus Fahrzuständen des Kraftfahrzeugs, ermittelt werden.

5. Verfahren nach einem oder mehreren der vorstehenden Ansprüche, **dadurch gekennzeichnet, dass** die dem Unterdruckspeicher (6) zugeführten Mengenstöme (56) mittels einer Stufenfunktion, welche durch eine das Ansprechen eines Servoaggregats (8, 10, 11) repräsentierende Signalflanke getriggert wird, ermittelt werden.

6. Verfahren nach einem oder mehreren der vorstehenden Ansprüche, **dadurch gekennzeichnet, dass** in Abhängigkeit von dem aus der Mengenbilanz berechneten, in dem Unterdruckspeicher (6) herrschenden Druck, ein den Druck in dem Unterdruckspeicher (6) erniedrigender Eingriff an der Brennkraftmaschine, insbesondere ein Einschalten der Saugpumpe (30) und/oder ein Verstellen einer in-dem Saugrohr (1) etwa vorgesehenen Drosselklappe (19), vorgenommen wird.

7. Verfahren nach Anspruch 6, **dadurch gekennzeichnet, dass** ein Einschalten der Saugpumpe (30) Priorität vor einem Eingriff an der Brennkraftmaschine hat.

8. Verfahren nach einem oder mehreren der vorstehenden Ansprüche, **dadurch gekennzeichnet, dass** der berechnete, in dem Druckspeicher (6) herrschende Druck für eine Funktionsüberwachung eines etwa vorgesehenen Drucksensors (27) verwendet wird.

9. Computerprogramm, **dadurch gekennzeichnet, dass** es zur Durchführung des Verfahrens nach einem der Ansprüche 1 bis 8 geeignet ist, wenn es auf einem Computer ausgeführt wird.

10. Computerprogramm nach Anspruch 9, **dadurch gekennzeichnet, dass** es auf einem Speicher abgespeichert ist, insbesondere auf einem Flash-Memory.

11. Steuergerät für eine Brennkraftmaschine insbesondere eines Kraftfahrzeugs, bei der ein Unterdruckspeicher (6) vorgesehen ist, der die für mindestens eine Servofunktion (8, 10, 11) der Brennkraftmaschine benötigte Hilfsenergie in Form eines Unterdrucks bereitstellt und der mit einem von einem Saugrohr (1) der Brennkraftmaschine und einem von einer Saugpumpe (30) bereitgestellten Unterdruck beaufschlagt ist,
**gekennzeichnet durch**
Mittel (9, 61) zum Erfassen der Betätigung mindestens einer Servofunktion (8, 10, 11),
Mittel (23) zum Sensieren des in dem Saugrohr (1) herrschenden Drucks,
Mittel zum Erfassen des Betriebszustands der Saugpumpe (30), und
Mittel zum Ermitteln des in dem Unterdruckspeicher (6) herrschenden Drucks, die vorsehen,
dass Mengenströme dem Unterdruckspeicher (6) zugeführt werden, wenn wenigstens eine Servofunktion (8, 10, 11) anspricht, und
Mengenströme aus dem Unterdruckspeicher (6) abgeführt werden, wenn der in dem Saugrohr (1) herrschende Druck kleiner als der in dem Unterdruckspeicher (6) herrschende Druck ist,
Mengenströme aus dem Unterdruckspeicher (6) abgeführt werden, wenn die Saugpumpe (30) eingeschaltet ist,
und die vorsehen,
dass der in dem Unterdruckspeicher (6) herrschende Druck aus der Mengenbilanz der dem Unterdruckspeicher (6) zugeführten und aus dem Unterdruckspeicher (6) abgeführten Mengenströme ermittelt wird.

12. Steuergerät nach Anspruch 11, **gekennzeichnet durch** einen Summenbildner oder Integrator oder die dem Unterdruckspeicher (6) zugeführten Mengenströme und/oder die aus dem Unterdruckspeicher (6) abgeführten Mengenströme fortlaufend aufsummiert oder aufintegriert.

13. Steuergerät nach Anspruch 11 oder 12, **gekennzeichnet durch** Mittel zum Erfassen einer das Ansprechen einer Servofunktion (8, 10, 11) repräsentierenden Signalflanke und Mittel zur Berechnung der dem Unterdruckspeicher (6) zugeführten Mengenstöme anhand einer Stufenfunktion.

14. Steuergerät nach einem oder mehreren der Ansprüche 11 bis 13, **gekennzeichnet durch** Mittel (12, 19, 20) zum Einschalten der.Saugpumpe (30) und/oder zum Vornehmen eines den Druck in dem Unterdruckspeicher (6) erniedrigenden Eingriffs an der Brennkraftmaschine, insbesondere eines Verstellens einer in dem Saugrohr (1) etwa vorgesehenen Drosselklappe (19), in Abhängigkeit von dem aus der Mengenbilanz berechneten, in dem Unterdruckspeicher (6) herrschenden Druck.

15. Steuergerät nach einem oder mehreren der Ansprüche 11 bis 14, **gekennzeichnet durch** Mittel zur Funktionsüberwachung eines etwa vorhandenen Drucksensors anhand des berechneten, in dem Unterdruckspeicher (6) herrschenden Drucks.

## Claims

1. Method for operating a partial vacuum accumulator (6) which is provided in an internal combustion engine, in particular of a motor vehicle, and which makes available the auxiliary energy, in the form of a partial vacuum, which is required for at least one servo unit (8, 10, 11), and to which a partial vacuum prevailing in an intake manifold (1) of the internal combustion engine and in an, in particular, electric suction pump (30) is applied, **characterized in that** mass flows are fed to the partial vacuum accumulator (6) in a model if at least one servo unit (8, 10, 11) is activated; mass flows are discharged from the partial vacuum accumulator (6) if the pressure prevailing in the intake manifold (1) is lower than the pressure prevailing in the partial vacuum accumulator (6); mass flows are discharged from the partial vacuum accumulator (6) if the electric suction pump (30) is switched on; and the pressure prevailing in the partial vacuum accumulator (6) is determined from the quantity balance of the mass flows which are fed to the partial vacuum accumulator (6) and the mass flows which are discharged from the partial vacuum accumulator (6).

2. Method according to Claim 1, **characterized in that** the mass flows (56) which are fed to the partial vacuum accumulator (6) and/or the mass flows (44) which are discharged from the partial vacuum accumulator (6) are continuously summed or integrated (58) with respectively corresponding signs.

3. Method according to Claim 1 or 2, **characterized in that** the mass flows are discharged (45) from the partial vacuum accumulator (6) only if the difference between the pressure prevailing in the intake manifold and the pressure prevailing in the partial vacuum accumulator (6) exceeds a predefinable threshold value.

4. Method according to one or more of Claims 1 to 3, **characterized in that** the mass flows (56) which are fed to the partial vacuum accumulator (6) and/or the mass flows (44) which are discharged from the partial vacuum accumulator (6) are determined from operating states of the internal combustion engine, in particular from travel states of the motor vehicle.

5. Method according to one or more of the preceding claims, **characterized in that** the mass flows (56) which are fed to the partial vacuum accumulator (6) are determined by means of a step function which is triggered by a signal edge which represents the response of a servo unit (8, 10, 11).

6. Method according to one or more of the preceding claims, **characterized in that** an intervention in the internal combustion engine which reduces the pressure in the partial vacuum accumulator (6), in particular switching on of the suction pump (30) and/or adjustment of a throttle valve (19) which is provided for example in the intake manifold (1), is performed as a function of the pressure which is calculated from the quantity balance and prevails in the partial vacuum accumulator (6).

7. Method according to Claim 6, **characterized in that** switching on of the suction pump (30) has priority over intervention in the internal combustion engine.

8. Method according to one or more of the preceding claims, **characterized in that** the calculated pressure which prevails in the pressure accumulator (6) is used for functionally monitoring a pressure sensor (27) which is provided for example.

9. Computer program, **characterized in that** it is suitable for carrying out the method according to one of Claims 1 to 8 if it is executed on a computer.

10. Computer program according to Claim 9, **characterized in that** it is stored in a memory, in particular in a flash memory.

11. Control unit for an internal combustion engine, in particular of a motor vehicle, in which a partial vacuum accumulator (6) is provided which makes available the auxiliary energy, in the form of a partial vacuum, which is required for at least one servo function (8, 10, 11) of the internal combustion engine, and to which a partial vacuum which is made available by an intake manifold (1) of the internal combustion engine is applied and a partial vacuum which is made available by a suction pump (30) is applied,
**characterized by**
means (9, 61) for sensing the activation of at least one servo function (8, 10, 11),
means (23) for sensing the pressure which prevails in the intake manifold (1),
means for sensing the operating state of the suction pump (30), and
means for determining the pressure which prevails in the partial vacuum accumulator (6), which provide
that mass flows are fed to the partial vacuum accumulator (6) if at least one servo function (8, 10, 11) responds, and
mass flows are discharged from the partial vacuum accumulator (6) if the pressure prevailing in the intake manifold (1) is lower than the pressure prevailing in the partial vacuum accumulator (6),
mass flows are discharged from the partial vacuum accumulator (6) if the suction pump (30) is switched on,
and which provide
that the pressure prevailing in the partial vacuum accumulator (6) is determined from the quantity balance of the mass flows which are fed to the partial vacuum accumulator (6) and the mass flows which are discharged from the partial vacuum accumulator (6).

12. Control unit according to Claim 11, **characterized by** a summing element or integrator (58) which continuously sums or integrates the mass flows which are fed to the partial vacuum accumulator (6) and/or the mass flows which are discharged from the partial vacuum accumulator (6).

13. Control unit according to Claim 11 or 12, **characterized by** means for detecting a signal edge which represents the response of a servo function (8, 10, 11), and means for calculating the mass flows which are fed to the partial vacuum accumulator (6), by means of a step function.

14. Control unit according to one or more of Claims 11 to 13, **characterized by** means (12, 19, 20) for switching on the suction pump (30) and/or for performing an intervention in the internal combustion engine which reduces the pressure in the partial vacuum accumulator (6), in particular adjustment of a throttle valve (19) which is provided for example in the intake manifold (1), said intervention being performed as a function of the pressure which is calculated from the quantity balance and prevails in the partial vacuum accumulator (6).

15. Control unit according to one or more of Claims 11 to 14, **characterized by** means for functionally monitoring a pressure sensor which is present, for example, by reference to the calculated pressure which prevails in the partial vacuum accumulator (6).

## Revendications

1. Procédé de gestion d'un réservoir à dépression (6) équipant un moteur à combustion interne notamment d'un véhicule automobile, fournissant sous la forme d'une dépression, l'énergie auxiliaire nécessaire à au moins une unité d'assistance (8, 10, 11), le réservoir étant sollicité par la dépression régnant dans la conduite d'admission 1 du moteur à combustion interne et notamment dans une pompe électrique aspirante (30)
**caractérisé en ce que**
dans un modèle, on fournit des débits massiques au réservoir à dépression (6) si au moins une unité d'assistance (8, 10, 11) est actionnée ; on évacue des flux massiques du réservoir à dépression (6) si la pression régnant dans la conduite d'admission (1) est inférieure à la pression régnant dans le réservoir à dépression (6) ; on évacue des flux massiques du réservoir à dépression (6) si la pompe électrique aspirante (30) est branchée ; et on fournit la pression régnant dans le réservoir à dépression (6) résultant du bilan massique au réservoir à dépression (6) et on détermine les flux massiques évacués du réservoir à dépression (6).

2. Procédé selon la revendication 1,
**caractérisé en ce qu'**
on additionne ou on intègre (58) les flux massiques (56) fournis au réservoir à dépression (6) et/ou les flux massiques (44) prélevés du réservoir à dépression (6) en appliquant un signe algébrique correspondant.

3. Procédé selon la revendication 1 ou 2,
**caractérisé en ce qu'**
on évacue (45) les flux massiques du réservoir à dépression (6) si la différence entre la pression régnant dans la conduite d'admission et la pression régnant dans le réservoir à dépression (6) dépasse un seuil prédéfini.

4. Procédé selon une ou plusieurs des revendications 1 à 3,
**caractérisé en ce qu'**
on détermine les flux massiques (44) fournis (56) au réservoir à dépression (6) et/ou prélevés du réservoir à dépression (6) à partir des états de fonctionnement du moteur à combustion interne notamment des états de roulage du véhicule.

5. Procédé selon une ou plusieurs des revendications précédentes
**caractérisé en ce qu'**
on détermine les flux massiques (56) fournis au réservoir à dépression (6) à l'aide d'une fonction à paliers déclenchée par un flanc de signal représentant la mise en oeuvre d'une unité d'assistance (8, 10, 11).

6. Procédé selon une ou plusieurs des revendications précédentes
**caractérisé en ce qu'**
en fonction de la pression régnant dans le réservoir à dépression (6) et calculée à partir du bilan massique, on intervient sur le moteur à combustion interne dans le sens d'un abaissement de la pression dans le réservoir à dépression (6), notamment en branchant la pompe d'aspiration (30) et/ou en réglant un volet d'étranglement (19) prévu sensiblement au niveau de la conduite d'admission (1).

7. Procédé selon la revendication 6
**caractérisé en ce que**
la mise en oeuvre de la pompe aspirante (30) est prioritaire par rapport à une action sur le moteur à combustion interne.

8. Procédé selon une ou plusieurs des revendications précédentes
**caractérisé en ce qu'**
on utilise la pression calculée, régnant dans le réservoir à dépression (6) pour surveiller le fonctionnement d'un capteur de pression (27) prévu le cas échéant.

9. Programme d'ordinateur
**caractérisé en ce qu'**
il est destiné à exécuter un procédé selon l'une des revendications 1 à 8 sur un ordinateur.

10. Programme d'ordinateur selon la revendication 9
**caractérisé en ce qu'**
il est enregistré dans une mémoire notamment une mémoire flash.

11. Appareil de commande d'un moteur à combustion interne notamment un moteur équipant un véhicule automobile comportant un réservoir à dépression (6) qui fournit sous forme de dépression l'énergie auxiliaire nécessaire à au moins une unité d'assistance (8, 10, 11) du moteur à combustion interne, et qui reçoit la dépression de la conduite d'admission (1) du moteur à combustion interne et celle d'une pompe aspirante (30),
**caractérisé par**
- des moyens (9, 61) pour saisir l'actionnement d'au moins une fonction d'assistance (8, 10, 11)
- des moyens (23) pour détecter la pression régnant dans la conduite d'admission (1)
- des moyens pour saisir l'état de fonctionnement de la pompe aspirante (30) et
- des moyens pour déterminer la pression régnant dans le réservoir à dépression (6);
- moyens qui prévoient la fourniture des flux massiques au réservoir à dépression (6) si au moins une fonction d'assistance (8, 10, 11) est mise en oeuvre et
- des flux massiques sont prélevés dans le réservoir à dépression (6) si la pression régnant dans la conduite d'admission (1) est inférieure à la pression régnant dans le réservoir à dépression (6),
- des flux massiques sont prélevés dans le réservoir à dépression (6) si la pompe aspirante 30 est mise en oeuvre
et ces moyens prévoient que la pression régnant dans le réservoir à dépression (6) soit déterminée à partir du bilan massique des flux massiques fournis au réservoir à dépression (6) et de ceux prélevés dans le réservoir à dépression (6)

12. Appareil de commande selon la revendication 11
**caractérisé par**
un additionneur ou un intégrateur (58) qui additionne en continu ou intègre les flux massiques fournis ou prélevés du réservoir à dépression (6).

13. Appareil de commande selon la revendication 11 ou 12
**caractérisé par**
des moyens pour saisir un flanc de signal représentant la mise en oeuvre d'une fonction d'assistance (8, 10, 11) et des moyens pour calculer les flux massiques fournis au réservoir à dépression (6) à l'aide d'une fonction à paliers.

14. Appareil de commande selon une ou plusieurs des revendications 11 à 13
**caractérisé par**
des moyens (12, 19, 20) pour activer la pompe aspirante (30) et/ou pour effectuer une action abaissant la pression dans le réservoir à dépression (6) sur le moteur à combustion interne notamment un réglage de volet d'étranglement (19) au niveau de la conduite d'admission (1), en fonction de la pression calculée à partir du bilan massique, pression régnant dans le réservoir à dépression (6).

15. Appareil de commande selon une ou plusieurs des revendications 11 à 14
**caractérisé par**
des moyens de surveillance du fonctionnement d'un capteur de pression prévu le cas échéant, avec la pression calculée, régnant dans le réservoir à dépression (6).
